# EUROPEAN PATENT SPECIFICATION

(11) **EP 0 367 816 B1**
(45) Date of publication and mention of the grant of the patent: **08.06.1994**
(21) Application number: 89905310.2
(22) Date of filing: 14.04.1989
(51) Int. Cl.: G06F 9/46

(54) **REDUCING THE EFFECT OF PROCESSOR BLOCKING**
REDUZIERUNG VON PROZESSORBLOCKIERUNGSEFFEKTEN
REDUCTION DES EFFETS DU BLOCAGE D'UN PROCESSEUR

(30) Priority: 14.04.1988 US 181637
(43) Date of publication of application: 16.05.1990
(73) Proprietor: DIGITAL EQUIPMENT CORPORATION, Maynard Massachusetts 01754-1418 (US)
(72) Inventor: GAMACHE, Rodney, N., Merrimac, NH 03054 (US); FARNHAM, Stuart, J., Mason, NH 03033 (US); HARVEY, Michael, S., Nashua, NH 03062 (US)
(74) Representative: Goodman, Christopher
(86) International application number: US8901586
(87) International publication number: WO8909964

(56) References cited:
- ICC '79 Conference Record, 10-14 June 1979, Boston, MA, vol. 2 of 4, IEEE, P. Pizzirani: "A real time executive for an SPC telephone exchange", pages 21.6.1-21.6.5.
- IBM Technical Disclosure Bulletin, vol. 26, no. 6, November 1983, (New York, US), R.J. Curran et al.: "Suspension locking in a multilevel multiprocessor", pages 2820-2821.
- IBM Technical Disclosure Bulletin, vol. 22, no. 6, November 1979, (New York, US), W.D. Draper et al.: "Program-controlled interrupt level suspension", pages 2417-2418.

## Description

### Background of the Invention

This invention relates to controlling the supply of available tasks that may be executed by a processor when its work has been temporarily blocked by a conflict with another processor.

Such blocking may happen, for example, when one processor attempts to enter a critical region of code where the other processor is working. (Critical regions are set up to protect data stored in a shared memory against conflicting accesses by two or more processors.) Typically the critical region is protected by a flag in shared memory that is set when a processor is working in the region, and otherwise is cleared. A processor always checks the flag before entering the region, and if it finds the flag set, waits until the other processor has left the region.

In some systems, the waiting processor is assigned to work on other tasks until the critical region becomes free. Switching to such other tasks wastes time because current context information must be stored and recovered again each time another task is done.

Another known approach takes advantage of the fact that in some computers (e.g., Digital Equipment Corporation's VAX) each task is assigned one of, e.g., 32 interrupt priority levels that are ranked according to their relative urgencies and the relative overhead costs of executing them. Generally, when a processor is blocked from working in a critical region having a given interrupt priority level, the blocked processor may service only other tasks having higher interrupt priority levels. In IBM Technical Disclosure Bulletin, Vol 26, No 6, November 1983 "Suspension Locking In A Multilevel Multiprocessor" (p2820) there is described a system in which a processor, working on the highest priority task available to it may, upon finding itself blocked by another processor, attend to tasks at a lower priority level.

### Summary of the Invention

A general feature of the invention increases the supply of available tasks that may be executed by the blocked processor while it is waiting, by temporarily lowering the interrupt priority to a minimum level above which it will be permitted to accept tasks for execution.

Preferred embodiments of the invention include the following features. When the conflict arises as a result of one processor being blocked from a critical region of code in which another processor is working, the priority level of the blocked processor is lowered below the priority level of the critical region, but not lower than some predetermined priority level (based on the context switching overhead incurred for different priority levels), nor lower than the priority level that the blocked processor had before the conflict arose.

As a result, the blocked processor may be able to perform more tasks while waiting for the conflict to end, without incurring unreasonable amounts of context switching overhead, and without being directed to tasks at priority levels that are lower than the original priority level of the blocked processor. This scheme is easy to implement and flexible in its application.

Other advantages and features will become apparent from the following description of the preferred embodiment, and from the claims.

### Description of the Preferred Embodiment

We first briefly describe the drawings.

Fig. 1 is a block diagram of a portion of a multiple processor computer.

Fig. 2 is a chart of interrupt priority levels.

Fig. 3. is a flow chart of adjusting the minimum interrupt priority level for a processor.

### Structure

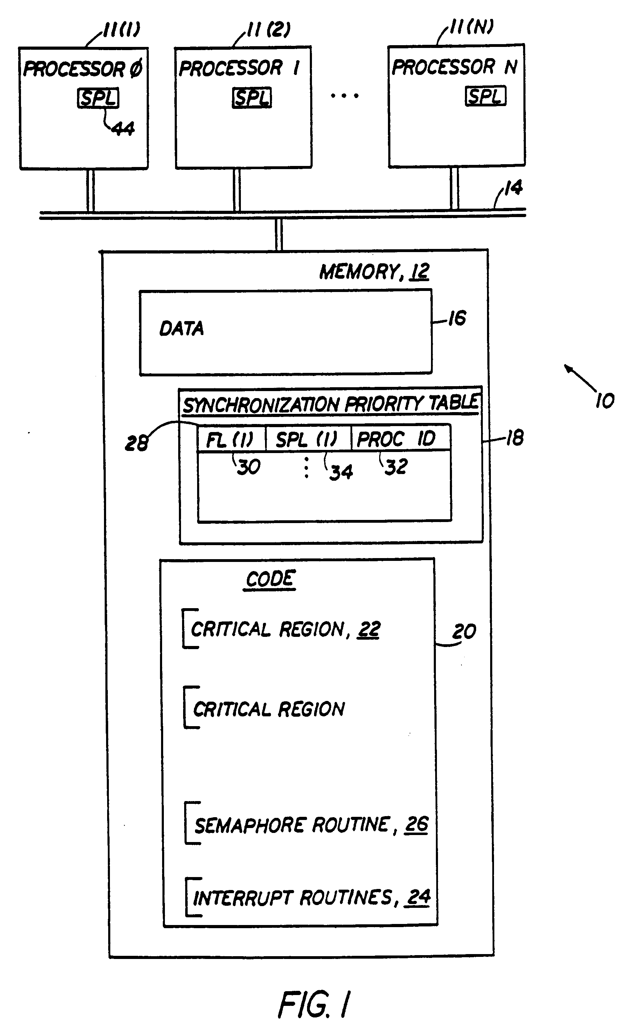

Referring to Fig. 1, in a symmetrical multiple processor (SMP) system 10, a number (N) of processors 11 (1) through 11 (N) share a common memory 12 via a bus 14. Stored in memory 12 are, among other things, data 16, a synchronization priority table 18, and operating system and application code 20 (including critical regions 22, various interrupt tasks 24, and a semaphore routine 26).

Each entry 28 in the synchronization priority table corresponds to one of the critical regions and serves to prevent more than one processor from entering the corresponding critical region. A flag field 30 (FL) indicates whether a processor is operating in the critical region. If so, that processor is identified in the PROC ID field 32. A synchronization priority level (SPL) field 34 contains a value corresponding to the interrupt priority level of the critical region associated with the table entry.

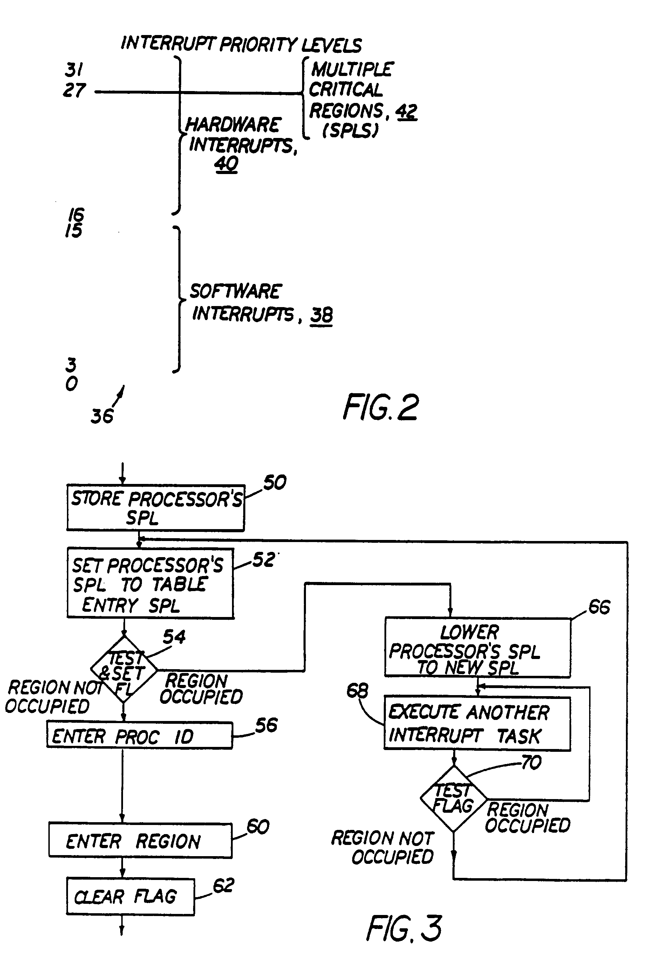

Referring to Fig. 2, in the VAX, there are 32 possible interrupt priority levels 36. The lower sixteen levels are software interrupts 38, while the upper sixteen levels are hardware interrupts 40 which, for example, involve service requests from application programs. When a processor responds to an interrupt at level 3 or higher, the context switching requires saving only the program counter (PC) and the program status long word (PSL). On the other hand, responding to an interrupt task below level 3 requires all registers to be saved.

There may be a number of critical regions 42 at a given interrupt priority level, e.g., level 27. In the synchronization priority table, the SPL field for a given entry is set to the interrupt priority level of the corresponding critical region.

Referring again to Fig. 1, each processor includes a hardware register 44 that holds an SPL value for that processor. A processor may not execute any task whose interrupt priority level is lower than its current SPL.

### Operation

When a processor is about to enter a critical region, it is directed to execute the semaphore routine 26.

Referring to Fig. 3, the semaphore routine first stores (50) the processor's SPL, and then consults the synchronization priority table entry 28 corresponding to the critical region and sets (52) the processor's SPL to the interrupt priority level found in the SPL field of the table entry. The semaphore routine then tests and sets (54) the flag field. If the flag was not previously set, then the critical region was not occupied and is now available only to this processor. The processor's ID is then entered (56) in the PROC ID field, and the processor is directed to enter the critical region (60). At the end of the critical region, the flag is cleared (62), making the critical region potentially available to other processors.

If, on the other hand, the semaphore routine finds the region occupied, it lowers (66) the SPL of the processor to a new SPL which is the greater of 3 or the processor's original SPL (the one stored in step 50). The processor is then free to respond to interrupts of tasks whose interrupt priority levels are higher than the new SPL, even though (potentially) lower than the critical region. After executing (68) each interrupt task, the processor returns to the semaphore routine, which proceeds to again test the flag (70). If the critical region remains occupied, the processor is again free to execute (68) another interrupt task. Otherwise, the semaphore routine restores (52) the processor's SPL to the table entry SPL and proceeds to step 54.

Lowering the SPL of the processor enlarges the supply of possible tasks that it is allowed to execute, instead of limiting the supply to tasks whose interrupt priority levels are higher than the SPL of the critical region, but without incurring the large overhead costs of context switching for tasks at interrupt priority level 2 or lower.

Not lowering the SPL below its original value assures that the processor is not diverted to service tasks at priority levels lower than the level the processor had been committed to prior to reaching the critical region.

Other embodiments are within the following claims. For example, other schemes may be used to determine the priority level to which the processor SPL is lowered when the processor is blocked.

## Claims

1. A method for controlling the supply of tasks available for execution by a processor (11) when its work has been temporarily blocked by a conflict with another processor (11) in a multiple processor system (10), comprising:
ranking tasks in an order of priority (36);
maintaining a current priority value for each processor (11) indicating the lowest priority level of tasks which the processor is currently permitted to execute;
storing (50) said current priority value as an original priority value before a processor (11) enters a critical region (22);
raising said current priority value of said processor (11) to a priority value associated with said critical region (22); and
when said processor (11) has been blocked by a conflict with another processor (11), lowering (66) said raised priority value of the blocked processor (11) to a new priority value, said new priority value not being lower than said stored original priority value.

2. The method of claim 1 wherein the priority value of the blocked processor is temporarily lowered to a value that is the greater of the stored original priority value and a predetermined value.

3. The method of claim 2 wherein said predetermined value is determined based on the context switching overhead required of tasks having different priority values.

4. The method of claim 1 wherein the critical region (22) has a priority value that is above the priority value of the blocked processor before the blocking, and the priority value of the blocked processor is temporarily raised to a value that is lower than the priority value of the critical region.

5. Apparatus for controlling the supply of tasks available for execution by a processor (11) when its work has been temporarily blocked by a conflict with another processor (11) in a multiple processor system (10), comprising:
means for ranking tasks in an order of priority (36);
means for maintaining a current priority value (44) for each processor (11) indicating the lowest priority level of tasks which the processor is currently permitted to execute;
means for storing (50) said current priority value as an original priority value before a processor (11) enters a critical region (22);
means for raising said current priority value of said processor (11) to a priority value associated with said critical region (22); and
means for lowering (66) said raised priority value of the blocked processor (11) to a new priority value, said new priority value not being lower than said stored original priority value, when said processor (11) has been blocked by a conflict with another processor (11).

6. The apparatus of claim 5 wherein said means for lowering includes means to temporarily lower said priority value to a value that is the greater of the stored original priority value and a predetermined value.

## Patentansprüche

1. Verfahren zum Steuern des Bestandes an zur Ausführung durch einen Prozessor (11) verfügbaren Aufgaben, wenn die Arbeit des Prozessors (11) in einem Multiprozessorsystem (10) durch einen Konflikt mit einem anderen Prozessor (11) vorübergehend blockiert worden ist, wobei das Verfahren folgendes aufweist:
- die Anordnung der Aufgaben in einer Prioritätsfolge (36);
- die Aufrechterhaltung eines aktuellen Prioritätswertes für jeden Prozessor (11), wobei dieser Wert das niedrigste Prioritätsniveau von Aufgaben angibt, die der Prozessor gegenwärtig durchführen darf;
- die Speicherung (50) des aktuellen Prioritätswertes als ursprünglichen Prioritätswert, bevor der Prozessor (11) in einen kritischen Bereich (22) eintritt;
- die Anhebung des aktuellen Prioritätswertes des Prozessors (11) auf einen Prioritätswert, der mit dem kritischen Bereich (22) assoziiert ist; und,
- wenn der Prozessor (11) durch einen Konflikt mit einem anderen Prozessor (11) blockiert worden ist, das Absenken (66) des angehobenen Prioritätswertes des blockierten Prozessors (11) auf einen neuen Prioritätswert, wobei der neue Prioritätswert nicht niedriger ist als der gespeicherte ursprüngliche Prioritätswert.

2. Verfahren nach Anspruch 1, wobei der Prioritätswert des blockierten Prozessors vorübergehend auf einen Wert abgesenkt wird, der im Vergleich zwischen dem gespeicherten ursprünglichen Prioritätswert und einem vorgegebenen Wert der größere dieser beiden Werte ist.

3. Verfahren nach Anspruch 2, wobei der vorgegebene Wert auf der Basis des Overheads für die Kontextumschaltung bestimmt wird, der von Aufgaben mit unterschiedlichen Prioritätswerten verlangt wird.

4. Verfahren nach Anspruch 1, wobei der kritische Bereich (22) einen Prioritätswert besitzt, der über dem Prioritätswert des blockierten Prozessors vor der Blockierung liegt, und wobei der Prioritätswert des blockierten Prozessors vorübergehend auf einen Wert angehoben wird, der niedriger ist als der Prioritätswert des kritischen Bereichs.

5. Vorrichtung zum Steuern des Bestands an zur Ausführung durch einen Prozessor (11) verfügbaren Aufgaben, wenn die Arbeit des Prozessors (11) in einem Multiprozessorsystem (10) durch einen Konflikt mit einem anderen Prozessor (11) vorübergehend blockiert worden ist, wobei die Vorrichtung folgendes aufweist:
- eine Einrichtung zum Anordnen der Aufgaben in einer Prioritätsfolge (36);
- eine Einrichtung zum Aufrechterhalten eines aktuellen Prioritätswertes (44) für jeden Prozessor (11), wobei dieser Wert das niedrigste Prioritätsniveau von Aufgaben angibt, die der Prozessor gegenwärtig durchführen darf;
- eine Einrichtung zum Speichern (50) des aktuellen Prioritätswertes als ursprünglichen Prioritätswert, bevor ein Prozessor (11) in einen kritischen Bereich (22) eintritt;
- eine Einrichtung zum Anheben des aktuellen Prioritätswertes des Prozessors (11) auf einen Prioritätswert, der mit dem kritischen Bereich (22) assoziiert ist; und
- eine Einrichtung zum Absenken (66) des angehobenen Prioritätswertes des blockierten Prozessors (11) auf einen neuen Prioritätswert, wenn der Prozessor (11) durch einen Konflikt mit einem anderen Prozessor (11) blockiert worden ist, wobei der neue Prioritätswert nicht niedriger ist als der gespeicherte ursprüngliche Prioritätswert.

6. Vorrichtung nach Anspruch 5, wobei die Einrichtung zum Absenken eine Einrichtung umfaßt, um den Prioritätswert vorübergehend auf einen Wert abzusenken, der im Vergleich zwischen dem gespeicherten ursprünglichen Wert und einem vorgegebenen Wert der größere dieser beiden Werte ist.

## Revendications

1. Procédé pour commander la fourniture de tâches disponibles en vue de leur exécution par un processeur (11) lorsque son travail a été bloqué temporairement en raison d'un conflit avec un autre processeur (11) dans un système à processeurs multiples (10) consistant:
à classer des tâches selon un ordre de priorité (36);
à maintenir une valeur de priorité courante pour chaque processeur (11) indiquant le niveau de priorité le plus bas de tâches que le processeur est actuellement autorisé à exécuter;
à emmagasiner (50) ladite valeur de priorité courante en tant que valeur de priorité initiale avant qu'un processeur n'entre dans une zone critique (22);
à augmenter ladite valeur de priorité courante dudit processeur (11) jusqu'à une valeur de priorité associée à ladite zone critique (22); et
lorsque le processeur (11) a été bloqué en raison d'un conflit avec un autre processeur (11), à réduire (66) ladite valeur de priorité augmentée du processeur bloqué (11) jusqu'à une nouvelle valeur de priorité, ladite nouvelle valeur de priorité n'étant pas inférieure à ladite valeur de priorité initiale emmagasinée.

2. Procédé selon la revendication 1, dans lequel la valeur de priorité du processeur bloqué est réduite temporairement jusqu'à une valeur qui est la plus grande des valeurs suivantes: la valeur de priorité initiale emmagasinée et une valeur prédéterminée.

3. Procédé selon la revendication 2, dans lequel ladite valeur prédéterminée est déterminée sur la base du temps système de changement de contexte requis pour des tâches ayant des valeurs de priorité différentes.

4. Procédé selon la revendication 1, dans lequel la zone critique (22) a une valeur de priorité qui est supérieure à la valeur de priorité du processeur bloqué avant le blocage, et la valeur de priorité du processeur bloqué est augmentée provisoirement jusqu'à une valeur qui est inférieure à la valeur de priorité de la zone critique.

5. Appareil pour commander la fourniture de tâches disponibles en vue de leur exécution par un processeur (11) lorsque son travail a été bloqué temporairement en raison d'un conflit avec un autre processeur (11) dans un système à processeurs multiples (10), comportant:
des moyens pour classer des tâches selon un ordre de priorité (36);
des moyens pour maintenir une valeur de priorité courante (44) pour chaque processeur (11) indiquant le niveau de priorité le plus bas de tâches que le processeur est actuellement autorisé à exécuter;
des moyens pour emmagasiner (50) ladite valeur de priorité courante en tant que valeur de priorité initiale avant qu'un processeur (11) n'entre dans une zone critique (22);
des moyens pour augmenter ladite valeur de priorité courante dudit processeur (11) jusqu'à une valeur de priorité associée à ladite zone critique (22); et
des moyens pour réduire (36) ladite valeur de priorité augmentée du processeur bloqué (11) jusqu'à une nouvelle valeur de priorité, ladite nouvelle valeur de priorité n'étant pas inférieure à ladite valeur de priorité initiale emmagasinée, lorsque ledit processeur (11) a été bloqué en raison d'un conflit avec un autre processeur (11).

6. Appareil selon la revendication 5, dans lequel lesdits moyens de réduction comprennent des moyens pour réduire provisoirement ladite valeur de priorité jusqu'à une valeur qui est la plus grande des valeurs suivantes: la valeur de priorité initiale emmagasinée et une valeur prédéterminée.
